# FASCICULE DE BREVET EUROPEEN

(11) **EP 0 976 641 B1**
(45) Date de publication et mention de la délivrance du brevet: **28.08.2002**
(21) Numéro de dépôt: 99401863.8
(22) Date de dépôt: 22.07.1999
(51) Int. Cl.: B62D 1/16, F16C 35/077

(54) **Assemblage d'un ensemble de commandes avec une colonne de direction de véhicule automobile**
Zusammenbau einer Bedieneinheit mit einer Kraftfahrzeuglenksäule
Assembling of an operating unit with a steering column of a motor vehicle

(30) Priorité: 31.07.1998 FR 9809908
(43) Date de publication de la demande: 02.02.2000
(73) Titulaire: LEMFORDER NACAM S.A., 41100 Vendome (FR)
(72) Inventeur: Duval, Benoît, 41100 Vendome (FR); Gentet, Frédéric, 41100 Vendome (FR); Augur, David, 41100 Vendome (FR)
(74) Mandataire: Chassagnon, Jean-Alain

(56) Documents cités:
- EP-A- 0 721 875
- EP-A- 0 826 574
- DE-U- 7 807 568

## Description

La présente invention se rapporte à l'assemblage d'un ensemble de commandes avec une colonne de direction de véhicule automobile, tel que défini dans le préambule de la revendication 1 et décrit dans le document DE-U-7807568.

La colonne de direction comporte un arbre de direction, qui est monté dans un tube-corps. Le tube-corps est disposé dans au moins un élément support, qui est fixé à la structure du véhicule. L'ensemble de commandes est disposé sous le volant, et il est monté sur le tube-corps.

Il existe des colonnes de direction fixes, ou réglables en hauteur et en profondeur, dont l'ensemble de commandes sous le volant appelé aussi "commodo" se monte directement dans le tube-corps, afin d'être disposé, suivant l'axe de direction, entre le volant et le tube-corps.

Dans ces types d'assemblages connus, il est nécessaire, lors du montage de l'ensemble de commandes en chaîne de fabrication, d'effectuer un réglage en position angulaire par rapport à l'axe de direction, afin de rattraper les tolérances de fabrication et de montage des différents éléments de la colonne de direction intervenant dans la position angulaire finale de l'ensemble de commandes.

La but de la présente invention est de proposer un assemblage, qui évite les inconvénients décrits ci-dessus ; et qui permette de réaliser directement le montage de l'ensemble de commandes dans le tube-corps, c'est-à-dire sans aucun réglage en chaîne de fabrication, tout en permettant d'obtenir la position angulaire exacte demandée.

L'assemblage d'un ensemble de commandes avec une colonne de direction de véhicule automobile selon l'invention, est constitué par une colonne de direction, qui comporte un arbre de direction monté libre en rotation dans un tube-corps à l'aide de deux roulements. Un volant est relié à l'arbre de direction, et l'ensemble de commandes est disposé sous le volant et est monté sur le tube-corps. Ledit tube-corps est disposé dans au moins un élément support fixé à la structure du véhicule automobile. Le roulement, qui est situé du côté du volant, est disposé entre le tube-corps et l'arbre de direction.

Ledit assemblage comporte une bague en matière plastique, qui est agencée entre ledit roulement et le tube-corps. Ladite bague comporte dans le sens axial une portion centrale et une portion extérieure. La portion centrale reçoit le roulement, et la portion extérieure est le prolongement axial de la portion centrale, la portion extérieure étant située du côté de l'ensemble de commande et du volant.

Ladite portion extérieure est munie d'au moins une forme, qui est correctement positionnée angulairement par rapport à l'interface entre l'un des éléments support et la structure du véhicule. Ladite forme est agencée et dimensionnée pour s'interpénétrer avec une forme conjuguée, qui est aménagée dans l'ensemble de commandes, de manière que cet ensemble de commandes soit monté sur le tube-corps à la position angulaire exacte désirée par rapport à l'interface entre l'un des éléments support et la structure du véhicule.

Avantageusement, la bague en matière plastique comporte :
- la portion centrale dans laquelle est monté le roulement ;
- la portion extérieure, qui est munie de la forme d'assemblage avec la forme conjuguée de l'ensemble de commandes ;
- une portion intérieure, qui est séparée de la portion centrale par une cloison, le roulement venant s'appuyer contre le fond de ladite cloison.

De plus, la portion intérieure de la bague est munie de nervures radiales de renfort, qui sont agencées sur la face interne de ladite portion intérieure.

Selon un premier type de réalisation, la bague possède au moins une forme d'assemblage, qui est constituée par une encoche, qui coopère avec un téton aménagé dans l'ensemble de commandes.

Selon un autre type de réalisation, la bague possède au moins une forme d'assemblage, qui est constituée par un téton, qui coopère avec une encoche aménagée dans l'ensemble de commandes.

Dans le cas de colonnes de direction fixes, le tube-corps est disposé dans deux éléments supports fixés à la structure du véhicule.

Dans le cas de colonnes de direction réglables, le tube-corps est disposé dans :
- un premier élément support qui est constitué d'une embase ayant à chacune de ses deux extrémités un montant, le tube-corps étant disposé à l'intérieur des deux montants de l'élément support, lesdits montants étant sensiblement parallèles à l'axe de l'arbre de direction,
- un deuxième élément support, qui est constitué d'une embase ayant à chacune de ses deux extrémités un montant, le tube-corps étant disposé à l'intérieur des deux montants de l'élément support, lesdits montants étant sensiblement parallèles à l'axe de l'arbre de direction, et ledit tube-corps étant relié à l'élément support par un axe d'articulation,
- le tube-corps a un système de réglage en position par rapport à l'élément support, qui est verrouillé à la position choisie par un dispositif de serrage ayant un axe de serrage, qui traverse un carré renfort du tube-corps, et les deux montants, le dispositif de serrage étant commandé par un ensemble de manoeuvre .

Selon une architecture de l'invention :
- la bague est munie de deux encoches, qui sont agencées dans la portion extérieure ;
- le tube-corps est muni de deux encoches, qui sont agencées à son extrémité ; les encoches ont la même orientation angulaire et ont une largeur plus grande que le largeur des encoches correspondantes de la bague ; de manière à pouvoir réaliser le réglage angulaire de la bague, lors du montage de ladite bague dans le tube-corps ;
- la bague est bloquée axialement dans le tube-corps entre des butoirs internes et des sertissages ; les butoirs internes sont aménagés sur la face interne du tube-corps, et les sertissages sont aménagés à l'extrémité du tube-corps ; chacun des sertissages étant obtenu par deux saignées parallèles et de sens axial pour réaliser une languette, qui est rabattue contre la face latérale extérieure du roulement, chaque languette traversant une ouverture aménagée dans la portion extérieure de la bague.

Selon une autre architecture de l'invention :
- la bague est munie de deux tétons, qui sont agencés dans la portion extérieure ;
- la bague est bloquée axialement dans le tube-corps entre des butoirs internes et des sertissages ; les butoirs internes sont aménagés sur la face interne du tube-corps, et les sertissages sont aménagés à l'extrémité du tube-corps ; chacun des sertissages étant obtenu par deux saignées parallèles et de sens axial pour réaliser une languette, qui est rabattue contre la face latérale extérieure du roulement, chaque languette traversant une ouverture aménagée dans la portion extérieure de la bague.

Un procédé de montage d'une colonne de direction de véhicule automobile munie de l'assemblage de l'invention comporte :
- l'engagement du roulement dans la bague plastique, afin d'obtenir le sous-ensemble roulement-bague plastique ;
- l'introduction du sous-ensemble roulement-bague dans le tube-corps avec orientation angulaire correcte par rapport à l'axe de serrage ;
- la pénétration du sous-ensemble roulement-bague jusqu'à ce que la bague vienne en appui contre les butoirs internes, puis rabattement des languettes de sertissage contre la face latérale extérieure du roulement, afin d'assurer le blocage axial du sous-ensemble roulement-bague dans le tube-corps ;
- l'engagement de l'arbre de direction dans le roulement avec mise en place axiale dudit arbre de direction par rapport au tube-corps ; et
- le montage du tube-corps dans l'élément support ou les éléments supports.

Un autre procédé de montage d'une colonne de direction de véhicule automobile munie de l'assemblage de l'invention comporte :
- le montage du tube-corps dans l'élément support, ou les éléments supports ;
- l'engagement du roulement dans la bague plastique afin d'obtenir le sous-ensemble roulement et bague plastique ;
- l'introduction du sous-ensemble roulement-bague dans le tube-corps avec orientation angulaire correcte par rapport à l'interface de l'élément support avec la structure du véhicule automobile ;
- la pénétration du sous-ensemble roulement-bague jusqu'à ce que la bague vienne en appui contre les butoirs internes, puis rabattement des languettes de sertissage contre la face latérale extérieure du roulement, afin d'assurer le blocage axial du sous-ensemble roulement-bague dans le tube-corps ; et
- l'engagement de l'arbre de direction dans le roulement avec mise en place axiale dudit arbre de direction par rapport au tube-corps.

L'assemblage d'un ensemble de commandes avec une colonne de direction de véhicule automobile selon l'invention présente ainsi l'avantage de permettre le montage dans le tube-corps sans aucun réglage, tout en garantissant une position angulaire correcte par rapport à la référence choisie, qui peut être l'axe de serrage, ou l'interface avec entre un élément support et la structure du véhicule.

De plus, la bague plastique, du fait de sa matière permet de s'adapter aux tolérances de fabrication du tube-corps.

Cet assemblage a en outre d'autres avantages.

Les butoirs internes, qui sont réalisés sur le tube-corps, arrêtent positivement la bague, du fait de l'interférence de la bague avec les butoirs internes ; et ceci jusqu'à un effort connu, qui correspond à l'utilisation normale de la colonne. En cas de choc, lorsque les efforts transmis au roulement sont très importants et supérieurs à l'effort connu précédant, la bague a la possibilité de passer au-dessus des butoirs.

Le glissement de la bague sur les butoirs est relativement constant, et permet une absorption d'énergie contrôlée lors du choc.

Enfin, pour des problèmes de fabrication, la position axiale du montage de la bague sur le tube peut varier sans altérer le fonctionnement ultérieur d'absorption d'énergie en cas de choc.

D'autres caractéristiques et avantages de la présente invention ressortiront de la description qui va suivre, donnée à titre d'exemples nullement limitatifs, en référence aux dessins annexés correspondants dans lesquels :
- la figure 1 est une vue éclatée en perspective de l'assemblage selon l'invention d'un ensemble de commandes avec une colonne de direction de véhicule automobile ;
- la figure 2 est une vue en perspective de l'extrémité de l'ensemble du tube-corps avec l'arbre de direction ;
- la figure 3 est une coupe suivant III-III de la figure 2 ;
- la figure 4 est une coupe suivant IV-IV de la figure 2 de la bague avec le roulement ;
- la figure 5 est une vue suivant V de la figure 4 ;
- la figure 6 est une vue d'ensemble longitudinale de la colonne de direction ; et
- la figure 7 est une vue éclatée en perspective analogue à la figure 1, d'un autre mode de réalisation de l'invention.

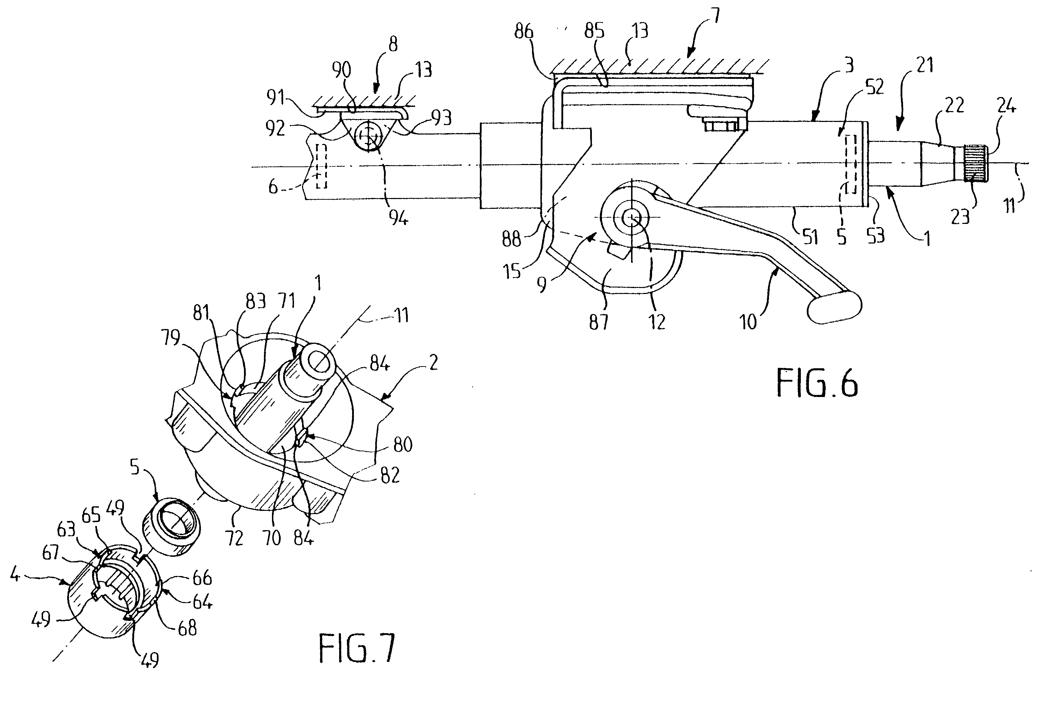

L'invention se rapporte à une colonne de direction de véhicule automobile dont l'ensemble situé près du volant du conducteur est représenté sur la figure 6. La colonne de direction comporte un arbre de direction 1, qui est monté dans un tube-corps 3 suivant l'axe 11 de l'arbre de direction 1. L'arbre de direction 1 est monté libre en rotation dans le tube-corps 3 par rapport à son axe 11. Ce montage est réalisé par l'intermédiaire de deux roulements 5 et 6. Le roulement 5 est disposé entre le tube-corps 3 et l'arbre de direction 1, et il est situé du côté du volant.

Le tube-corps 3 est muni d'un carré-renfort 15, qui est disposé à l'intérieur d'un élément-support 7. L'élément-support 7 est constitué d'une embase 86, qui est munie à chacune de ses deux extrémités d'un montant référencé 87 et 88. L'élément-support 7 est raccordé à la structure 13 du véhicule automobile avec une interface 85. L'ensemble tube-corps 3 avec son carré-renfort 15 est disposé à l'intérieur des deux montants 87 et 88 de l'élément-support 7. Lesdits montants sont sensiblement parallèles à l'axe 11.

Un autre élément-support 8 est disposé du côté du roulement 6, c'est-à-dire à l'opposé du volant du conducteur. L'élément-support 8 est constitué d'une embase 91, qui est munie à chacune de ses deux extrémités d'un montant référencé 92 et 93. L'élément-support 8 est raccordé à la structure 13 du véhicule automobile avec une interface 90.

L'ensemble du tube-corps 3 est disposé à l'intérieur des deux montants 92 et 93 de l'élément-support 8. Lesdits montants 92 et 93 sont sensiblement parallèles à l'axe 11 de l'arbre de direction 1.

L'invention peut s'appliquer à deux types de colonnes de direction : les colonnes de direction fixes, et les colonnes de direction réglables.

Dans le cas des colonnes de direction fixes, les éléments-supports 7 et 8 sont reliés de façon rigide à l'ensemble du tube-corps 3. Cela peut être par exemple par soudure ou tout autre moyen.

Dans le cas des colonnes de direction réglables en hauteur ou en profondeur, ou en hauteur et en profondeur, l'ensemble du tube-corps 3 est réglable par rapport à l'élément-support 7 et par rapport à l'élément-support 8.

L'ensemble du tube-corps 3 est relié à l'élément-support 8 par un axe d'articulation 94 sensiblement perpendiculaire à l'axe 11.

Le tube-corps 3 avec son carré-renfort 15 est relié à l'élément-support 7 par un système de réglage en position par rapport audit élément-support 7. Ce système de réglage en position est verrouillé à la position choisie par un dispositif de serrage 9, suivant un axe de serrage 12, qui est sensiblement perpendiculaire à l'axe 11 de l'arbre de direction 1.

L'axe de serrage 12 traverse le carré-renfort 15 du tube-corps 3, et les deux montants 87 et 88 de l'élément-support 7. Le dispositif de serrage 9 est commandé par un ensemble de manoeuvre 10, qui peut être manuel comme sur la figure 6 ou de tout autre type tel qu'une commande délocalisée. Le dispositif de serrage 9 est mis en position verrouillée ou déverrouillée par l'ensemble de manoeuvre 10.

Suivant les types de réalisation sur lesquels s'applique l'invention, l'axe de serrage 12 peut éventuellement traverser le tube-corps 3, qui n'est pas forcément équipé d'un carré-renfort 15. Les différents éléments constituant le dispositif de serrage 9 sont montés, soit sur une tige de serrage d'axe de serrage 12, soit par tout autre moyen.

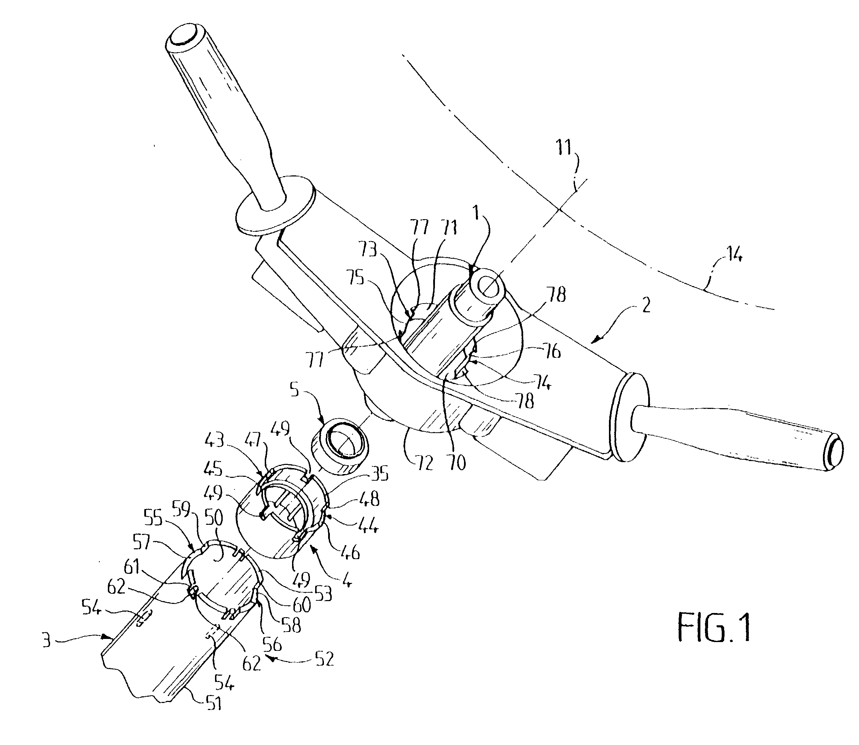

L'invention se rapporte à un assemblage représenté sur la figure 1, qui est une vue éclatée en perspective cavalière de l'ensemble de l'assemblage.

L'assemblage concerne le montage d'un ensemble de commandes 2 avec une colonne de direction de véhicule automobile de décrite ci-dessus.

L'ensemble de commandes 2 est disposé sous le volant 14 du conducteur. Le volant est relié à l'extrémité 21 de l'arbre de direction 1.

L'ensemble de commande est monté sur le tube-corps 3, et il est ainsi situé entre le volant 14 et le tube-corps 3.

Dans la suite de la description et pour un même élément, on appellera interne par rapport à l'axe 11 ce qui est le plus près de l'axe 11, et externe ce qui est le plus éloigné.

De la même façon et pour un même élément, on appellera extérieure suivant le sens axial de l'axe 11, ce qui est le plus prés du volant 14, et intérieure ce qui est le plus éloigné.

Dans ce qui suit, un même numéro de référence identifie toujours un même élément homologue, quel que soit le mode de réalisation ou sa variante d'exécution.

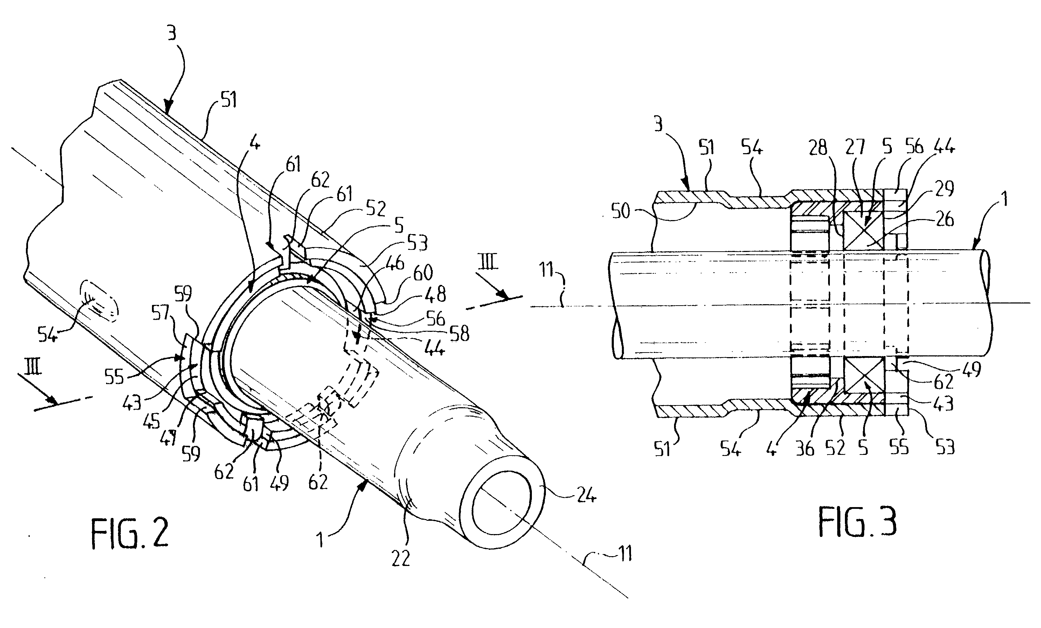

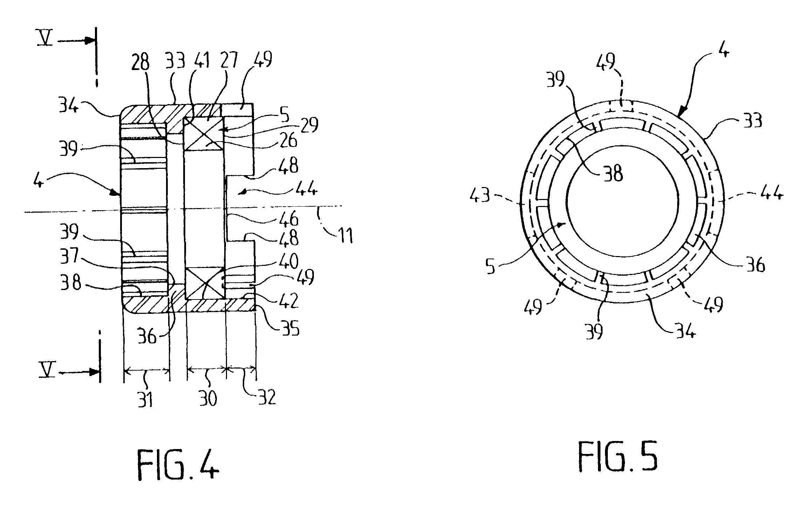

L'assemblage selon l'invention comporte une bague 4 en matière plastique, qui est agencée entre le roulement 5 et le tube-corps 3. Comme on peut le voir sur les figures 1, 2, 3, 4 et 5, la bague 4 comporte dans le sens axial une portion centrale 30, une portion intérieure 31 et une portion extérieure 32. La portion centrale 30 reçoit le roulement 5, et la portion extérieure 32 est le prolongement axial de la portion centrale 30. La portion extérieure 32 est ainsi située du côté de l'ensemble de commande 2 et du volant 14. La portion extérieure 32 est munie de deux formes référencées respectivement 43 et 44, qui sont correctement positionnées angulairement par rapport à l'interface 85 ou/et 90 située entre respectivement l'élément-support 7 et l'élément-support 8 avec la structure 13 du véhicule automobile.

Les formes 43 et 44 sont agencées et dimensionnées pour s'interpénétrer avec respectivement une forme conjuguée référencée 73 et 74, qui sont aménagées dans l'ensemble de commandes 2 ; de manière que cet ensemble de commandes soit monté sur le tube-corps 3 à la position angulaire exacte désirée par rapport à l'interface 85 ou/et 90 entre respectivement l'un des élément-support 7 et 8 et la structure 13 du véhicule.

La bague 4 en matière plastique a une face externe 33, une face latérale intérieure 34, et une face latérale extérieure 35. De plus, la bague 4 est munie d'une cloison 36 disposée entre la portion centrale 30 et la portion intérieure 31.

Le roulement 5 a une bague intérieure 26 et une bague extérieure 27, dont la face latérale intérieure est référencée 28 et la face latérale extérieure est référencée 29. Le roulement 5 est monté à force dans la bague 4 en s'engageant dans la face interne 42 de la portion extérieure 32, et le roulement qui s'engage à force dans cette face interne 42 vient s'appuyer contre un fond 41 de la cloison 36. La cloison 36 a une face interne 37 aménagée de façon à laisser passer librement l'arbre de direction 1. De plus, la portion intérieure 31 de la bague 4 est munie de nervures radiales 39 de renfort, qui sont agencées sur la face interne 38 de ladite portion intérieure 31.

La bague 4 possède deux formes d'assemblage qui sont constitués par une encoche 43 et 44. Ces encoches 43 et 44 coopèrent respectivement avec un téton 73 et 74 qui est aménagé dans l'ensemble de commandes 2. Dans le mode de réalisation représenté sur la figure 1, chacune des encoches a une forme sensiblement rectangulaire avec respectivement un fond 45 et 46, et des côtés 47 et 48. Ces côtés 47 et 48 sont sensiblement parallèles à l'axe 11 et les encoches 43 et 44 dans le cas représenté sont diamétralement opposées.

L'ensemble de commandes 2 sous volant 14 a un logement 70 dimensionné de manière à pouvoir venir s'engager sur le tube-corps 3. Ce logement 70 est équipé de deux tétons référencés 73 et 74, ces tétons ayant respectivement un sommet 75 et 76 et des côtés 77 et 78. Ces tétons 73 et 74 sont diamétralement opposés et sont dimensionnés de façon à pouvoir s'adapter exactement dans les encoches 43 et 44 aménagées dans la portion extérieure 32 de la bague 4.

Le tube-corps a à son extrémité 52 une face interne 50 et une face externe 51, et il se termine en bout par une face extérieure d'extrémité 53. Le tube-corps 3 est muni de deux encoches référencées 55 et 56 qui sont agencées à son extrémité 52. Les encoches 55 et 56 ont la même orientation angulaire et ont une largeur et une profondeur plus grande que la largeur et la profondeur des encoches correspondante 43 et 44 de la bague 4 ; de manière à pouvoir réaliser le réglage angulaire de la bague 4 lors du montage de ladite bague 4 dans le tube-corps 3.

La bague 4 en matière plastique est engagée dans le tube-corps 3 et elle est bloquée axialement dans le tube-corps 3 entre des butoirs internes 54 et des sertissages. Les butoirs internes 54 sont même aménagés sur la face interne 50 du tube-corps 3, et les sertissages sont aménagés à l'extrémité 52 du tube-corps 3. Chacun des sertissages est obtenu par deux saignées 61, qui sont parallèles et de sens axial afin de réaliser une languette 62, qui est rabattue contre la face latérale extérieure 29 du roulement 5. De plus, chaque languette 62 traverse une ouverture 49, qui est aménagée dans la portion extérieure 32 de la bague 4.

Chacune des encoches 55 et 56 a une forme sensiblement rectangulaire avec respectivement un fond 57 et 58 et des côtés 59 et 60.

Dans le mode de réalisation représenté sur la figure 7, la bague 4 est munie de deux tétons 63 et 64, qui sont agencés dans la portion extérieure 32. La bague 4 est bloquée axialement dans le tube-corps 3 entre les butoirs internes 54 et des sertissages. Les butoirs internes 54 sont aménagés sur la face interne 50 du tube-corps 3, et les sertissages sont aménagés à l'extrémité 52 du tube-corps 3. Chacun des sertissages est obtenu par deux saignées 61 qui sont parallèles et de sens axial pour réaliser une languette 62, qui est rabattue contre la face latérale extérieure 29 du roulement 5. Chaque languette 62 traverse une ouverture 49, qui est aménagée dans la portion extérieure 32 de la bague 4. Ces deux tétons 63 et 64 sont diamétralement opposés ou respectivement un sommet 65 et 66 et des côtés 67 et 68, qui sont sensiblement parallèles à l'axe 11. Les tétons 63 et 64 sont dimensionnés pour coopérer avec respectivement des encoches référencées 79 et 80 qui sont aménagées dans l'ensemble de commandes 2. L'ensemble de commande 2 possède alors dans son logement 70, deux encoches diamétralement opposées 79 et 80 qui ont respectivement un fond 81 et 82 et des côtés 83 et 84.

Selon l'invention, le procédé de montage d'une colonne de direction de véhicule automobile conforme à l'architecture précédemment décrite comporte :
- l'engagement du roulement 5 par force dans la face interne 40 de la portion centrale 30 de la bague 4, afin d'obtenir le sous-ensemble roulement 5-bague 4 plastique ;
- l'introduction du sous-ensemble roulement 5-bague 4 dans la face interne 50 du tube-corps 3 avec la présentation d'une orientation angulaire correcte par rapport à l'axe de serrage 12 ;
- la pénétration du sous-ensemble roulement 5-bague 4 jusqu'à ce que la bague vienne en appui contre les butoirs internes 54, puis le rabattement des languettes 62 de sertissage contre la face latérale extérieure 29 du roulement 5, afin d'assurer le blocage axial du sous-ensemble du roulement 5-bague 4 dans le tube-corps 3 ;
- l'engagement de l'arbre de direction 1 dans la bague intérieure 26 du roulement 5, avec la mise en place correcte dudit arbre de direction par rapport au tube-corps 3, en prenant comme position de réglage une position choisie sur la portion conique 22 de l'arbre de direction 1 par rapport à la face extérieure d'extrémité 53 du tube-corps 3 (le positionnement pourrait également se faire à partir de la face extérieure en bout 24 de la partie dentelée 23 de l'arbre de direction 1 par rapport à la face extérieure d'extrémité 53) ; et
- le montage du tube-corps 3 dans les éléments-supports 7 et 8.

Un autre procédé de montage de la colonne de direction avec l'assemblage selon l'invention comporte :
- le montage du tube-corps 3 dans les éléments-supports 7 et 8 ;
- l'engagement du roulement 5 dans la bague 4 plastique afin d'obtenir le sous-ensemble roulement 5-bague 4 plastique ;
- l'introduction du sous-ensemble roulement 5-bague 4 dans le tube-corps 3 avec l'orientation angulaire correcte par rapport à l'interface 85 de l'élément 7 avec la structure 13 du véhicule automobile ;
- la pénétration du sous-ensemble roulement 5-bague 4 jusqu'à ce que la bague 4 vienne en appui contre les butoirs internes 54, puis le rabattements des languettes 62 de sertissage contre la face latérale extérieure 29 du roulement 5, afin d'assurer le blocage axial du sous-ensemble roulement 5-bague 4 dans le tube-corps 3 ;et
- l'engagement de l'arbre de direction 1 dans le roulement 5 avec mise en place axiale dudit arbre de direction 1 par rapport au tube-corps 3.

## Revendications

1. Assemblage d'un ensemble de commandes (2) avec une colonne de direction de véhicule automobile, dans cet assemblage ladite colonne de direction comporte un arbre de direction (1), qui est monté libre en rotation dans un tube-corps (3) à l'aide de deux roulements (5 et 6), un volant (14) est relié à l'arbre de direction (1), et l'ensemble de commandes (2) est disposé sous le volant (14) et est monté sur le tube-corps (3), ledit tube-corps (3) est disposé dans au moins un élément support (7) fixé à la structure (13) du véhicule automobile, le roulement (5), qui est situé du côté du volant (14), est disposé entre le tube-corps (3) et l'arbre de direction (1) ledit assemblage comporte une bague (4) en matière plastique, qui est agencée entre ledit roulement (5) et le tube-corps (3), **caractérisé en ce que**
- ladite bague (4) comporte dans le sens axial une portion centrale (30) et une portion extérieure (32), la portion centrale (30) recevant le roulement (5) et la portion extérieure (32) étant le prolongement axial de la portion centrale (30), la portion extérieure (32) étant située du côté de l'ensemble de commandes (2) et du volant (14) ;
- ladite portion extérieure (32) est munie d'au moins une forme (43, 44 - 63, 64), qui est correctement positionnée angulairement par rapport à l'interface (85, 90) entre l'un des éléments support (7, 8) et la structure du véhicule (13) ;
- ladite forme (43, 44 - 63, 64) est agencée et dimensionnée pour s'interpénétrer avec une forme conjuguée (73, 74 - 79, 80), qui est aménagée dans l'ensemble de commandes (2), de manière que cet ensemble de commandes (2) soit monté sur le tube-corps (3) à la position angulaire exacte désirée par rapport à l'interface (85, 90) entre l'un des éléments support (7, 8) et la structure du véhicule (13).

2. Assemblage conforme à la revendication 1, **caractérisé en ce que** la bague (4) comporte :
- la portion centrale (30) dans laquelle est monté le roulement (5) ;
- la portion extérieure (32), qui est munie de la forme (43, 44 - 63, 64) d'assemblage avec la forme conjuguée (73, 74 - 79, 80) de l'ensemble de commandes (2) ;
- une portion intérieure (31), qui est séparée de la portion centrale (30) par une cloison (36), le roulement (5) venant s'appuyer contre le fond (41) de ladite cloison (36).

3. Assemblage conforme à la revendication 2, **caractérisé en ce que** la portion intérieure (31) de la bague (4) est munie de nervures radiales (39) de renfort, qui sont agencées sur la face interne (38) de ladite portion intérieure (31).

4. Assemblage conforme à l'une quelconque des revendications précédentes, **caractérisé en ce que** la bague (4) possède au moins une forme d'assemblage, qui est constituée par une encoche (43, 44), qui coopère avec un téton (73, 74) aménagé dans l'ensemble de commandes (2).

5. Assemblage conforme à l'une quelconque des revendications 1 à 3, **caractérisé en ce que** la bague (4) possède au moins une forme d'assemblage, qui est constituée par un téton (63, 64), qui coopère avec une encoche (79, 80) aménagée dans l'ensemble de commandes (2).

6. Assemblage conforme à l'une quelconque des revendications précédentes, **caractérisé en ce que** le tube-corps (3) est disposé dans deux éléments supports (7 et 8) fixés à la structure (13) du véhicule.

7. Assemblage conforme à l'une quelconque des revendications 1 à 5, **caractérisé en ce que** :
- le tube-corps 3 est disposé dans :
- un premier élément support (7) qui est constitué d'une embase (86) ayant à chacune de ses deux extrémités un montant (87, 88), le tube-corps (3) étant disposé à l'intérieur des deux montants (87, 88) de l'élément support (7), lesdits montants (87, 88) étant sensiblement parallèles à l'axe (11) de l'arbre de direction (1),
- un deuxième élément support (8), qui est constitué d'une embase (91) ayant à chacune de ses deux extrémités un montant (92, 93), le tube-corps (3) étant disposé à l'intérieur des deux montants (92, 93) de l'élément support (8), lesdits montants (92, 93) étant sensiblement parallèles à l'axe (11) de l'arbre de direction, et ledit tube-corps (3) étant relié à l'élément support (8) par un axe d'articulation (94),
- le tube-corps (3) a un système de réglage en position par rapport à l'élément support (7), qui est verrouillé à la position choisie par un dispositif de serrage (9) ayant un axe de serrage (12), qui traverse un carré renfort (15) du tube-corps (3), et les deux montants (87) et (88), le dispositif de serrage (3) étant commandé par un ensemble de manoeuvre (10).

8. Assemblage conforme à l'une des revendications 6 ou 7 **caractérisé en ce que** :
- la bague (4) est munie de deux encoches (43) et (44), qui sont agencées dans la portion extérieure (32) ;
- le tube-corps (3) est muni de deux encoches (55) et (56), qui sont agencées à son extrémité (52) ; les encoches (55) et (56) ont la même orientation angulaire et ont une largeur plus grande que le largeur des encoches correspondantes (43) et (44) de la bague (4) ; de manière à pouvoir réaliser le réglage angulaire de la bague (4), lors du montage de ladite bague (4) dans le tube-corps (3) ;
- la bague (4) est bloquée axialement dans le tube-corps (3) entre des butoirs internes (54) et des sertissages ; les butoirs internes (54) sont aménagés sur la face interne (50) du tube-corps (3), et les sertissages sont aménagés à l'extrémité (52) du tube-corps (3) ; chacun des sertissages étant obtenu par deux saignées (61) parallèles et de sens axial pour réaliser une languette (62), qui est rabattue contre la face latérale extérieure (29) du roulement (5), chaque languette (62) traversant une ouverture (49) aménagée dans la portion extérieure (32) de la bague (4).

9. Assemblage conforme à l'une des revendications 6 ou 7, **caractérisé en ce que** :
- la bague (4) est munie de deux tétons (63) et (64), qui sont agencés dans la portion extérieure (32) ;
- la bague (4) est bloquée axialement dans le tube-corps (3) entre des butoirs internes (54) et des sertissages ; les butoirs internes (54) sont aménagés sur la face interne (50) du tube-corps (3), et les sertissages sont aménagés à l'extrémité (52) du tube-corps (3) ; chacun des sertissages étant obtenu par deux saignées (61) parallèles et de sens axial pour réaliser une languette (62), qui est rabattue contre la face latérale extérieure (29) du roulement (5), chaque languette (62) traversant une ouverture (49) aménagée dans la portion extérieure (32) de la bague (4).

10. Procédé de montage d'une colonne de direction de véhicule automobile conforme à l'une quelconque des revendications précédentes, **caractérisé en ce qu'**il comporte :
- l'engagement du roulement (5) dans la bague (4) plastique, afin d'obtenir le sous-ensemble roulement (5)-bague (4) plastique ;
- l'introduction du sous-ensemble roulement (5)-bague (4) dans le tube-corps (3) avec orientation angulaire correcte par rapport à l'axe de serrage (12) ;
- la pénétration du sous-ensemble roulement (5)-bague (4) jusqu'à ce que la bague (4) vienne en appui contre les butoirs internes (54), puis rabattement des languettes (62) de sertissage contre la face latérale extérieure (29) du roulement (5), afin d'assurer le blocage axial du sous-ensemble roulement (5)-bague (4) dans le tube-corps (3) ;
- l'engagement de l'arbre de direction (1) dans le roulement (5) avec mise en place axiale dudit arbre de direction par rapport au tube-corps (3) ; et
- le montage du tube-corps (3) dans l'élément support (7) ou les éléments supports (7) et (8).

11. Procédé de montage d'une colonne de direction de véhicule automobile conforme à l'une quelconque des revendications 1 à 9, **caractérisé en ce qu'**il comporte :
- le montage du tube-corps (3) dans l'élément support (7), ou les éléments supports (7) et (8) ;
- l'engagement du roulement dans la bague (4) plastique afin d'obtenir le sous-ensemble roulement (5) et bague (4) plastique ;
- l'introduction du sous-ensemble roulement (5)-bague (4) dans le tube-corps (3) avec orientation angulaire correcte par rapport à l'interface (85) de l'élément support (7) avec la structure (13) du véhicule automobile ;
- la pénétration du sous-ensemble roulement (5)-bague (4) jusqu'à ce que la bague (4) vienne en appui contre les butoirs internes (54), puis rabattement des languettes (62) de sertissage contre la face latérale extérieure (35) du roulement (5), afin d'assurer le blocage axial du sous-ensemble roulement (5)-bague (4) dans le tube-corps (3) ; et
- l'engagement de l'arbre de direction (1) dans le roulement (5) avec mise en place axiale dudit arbre de direction (1) par rapport au tube-corps (3).

## Patentansprüche

1. Zusammenbau einer Bedieneinheit (2) mit einer Lenksäule eines Kraftfahrzeugs, wobei die Lenksäule in diesem Zusammenbau eine Lenkwelle (1) umfaßt, die mittels zweier Lager (5 und 6) in einem Rohrkörper (3) frei zur Drehung angebracht ist, ein Lenkrad (14) mit der Lenkwelle (1) verbunden ist und die Bedieneinheit (2) unter dem Lenkrad (14) vorgesehen ist und auf dem Rohrkörper (3) angebracht ist, der Rohrkörper (3) in wenigstens einem an dem Aufbau (13) des Kraftfahrzeugs befestigten Trägerelement (7) angeordnet ist, das Lager (5), das sich auf der Seite des Lenkrads (14) befindet, zwischen dem Rohrkörper (3) und der Lenkwelle (1) angeordnet ist, der Zusammenbau einen Ring (4) aus Kunststoff umfaßt, der zwischen dem Lager (5) und dem Rohrkörper (3) angeordnet ist, **dadurch gekennzeichnet, daß**
- der Ring (4) in der axialen Richtung einen zentralen Abschnitt (30) und einen äußeren Abschnitt (32) umfaßt, wobei der zentrale Abschnitt (30) das Lager (5) aufnimmt und der äußere Abschnitt (32) die axiale Verlängerung des zentralen Abschnitts (30) ist, wobei sich der äußere Abschnitt (32) auf der Seite der Bedieneinheit (2) und des Lenkrads (14) befindet;
- der äußere Abschnitt (32) mit wenigstens einer Form (43, 44 - 63, 64) versehen ist, die winkelmäßig korrekt in bezug auf die Grenzfläche (85, 90) zwischen dem einen der Trägerelemente (7, 8) und dem Aufbau des Fahrzeugs (13) positioniert ist;
- die Form (43, 44 - 63, 64) angeordnet und bemessen ist, um sich mit einer zugeordneten Form (73, 74 - 79, 80) zu durchdringen, die in der Bedieneinheit (2) angeordnet ist derart, daß diese Bedieneinheit (2) auf dem Rohrkörper (3) in der gewünschten exakten Winkelposition in bezug auf die Grenzfläche (85, 90) zwischen dem einen der Trägerelemente (7, 8) und dem Aufbau des Fahrzeugs (13) angebracht ist.

2. Zusammenbau nach Anspruch 1, **dadurch gekennzeichnet, daß** der Ring (4) umfaßt:
- den zentralen Abschnitt (30), in dem das Lager (5) angebracht ist;
- den äußeren Abschnitt (32), der mit der Form (43, 44-63, 64) für den Zusammenbau mit der zugeordneten Form (73, 74 - 79, 80) der Bedieneinheit (2) versehen ist;
- einen inneren Abschnitt (31), der von dem zentralen Abschnitt (30) durch eine Zwischenwand (36) getrennt ist, wobei das Lager (5) zur Auflage gegen den Boden (41) der Zwischenwand (36) gelangt.

3. Zusammenbau nach Anspruch 2, **dadurch gekennzeichnet, daß** der innere Abschnitt (31) des Rings (4) mit radialen Versteifungsrippen (39) versehen ist, die auf der Innenseite (38) des inneren Abschnitts (31) angeordnet sind.

4. Zusammenbau nach einem beliebigen der vorhergehenden Ansprüche, **dadurch gekennzeichnet, daß** der Ring (4) wenigstens eine Zusammenbauform aufweist, die aus einem Einschnitt (43, 44) besteht, der mit einem Ansatz (73, 74) zusammenwirkt, der in der Bedieneinheit (2) angeordnet ist.

5. Zusammenbau nach einem beliebigen der Ansprüche 1 bis 3, **dadurch gekennzeichnet, daß** der Ring (4) wenigstens eine Zusammenbauform aufweist, die aus einem Ansatz (63, 64) besteht, der mit einem Einschnitt (79, 80) zusammenwirkt, der in der Bedieneinheit (2) angeordnet ist.

6. Zusammenbau nach einem beliebigen der vorhergehenden Ansprüche, **dadurch gekennzeichnet, daß** der Rohrkörper (3) in zwei Trägerelementen (7 und 8) angeordnet ist, die an dem Aufbau (13) des Fahrzeugs befestigt sind.

7. Zusammenbau nach einem beliebigen der Ansprüche 1 bis 5, **dadurch gekennzeichnet, daß**:
- der Rohrkörper (3) angeordnet ist in:
- einem ersten Trägerelement (7), das aus einer Befestigungsfläche (86) besteht, die an jedem ihrer beiden Enden einen Stützschenkel (87, 88) aufweist, wobei der Rohrkörper (3) im Inneren der beiden Stützschenkel (87, 88) des Trägerelements (7) angeordnet ist, wobei die beiden Stützschenkel (87, 88) im wesentlichen parallel zur Achse (11) der Lenkwelle (1) sind;
- einem zweiten Trägerelement (8), das aus einer Befestigungsfläche (91) besteht, die an jedem ihrer beiden Enden einen Stützschenkel (92, 93) aufweist, wobei der Rohrkörper (3) im Inneren der beiden Stützschenkel (92, 93) des Trägerelements (8) angeordnet ist, wobei die Stützschenkel (92, 93) im wesentlichen parallel zur Achse (11) der Lenkwelle sind und der Rohrkörper (3) mit dem Trägerelement (8) mittels einer Drehachse (94) verbunden ist,
- der Rohrkörper (3) ein System zur Positionseinstellung in bezug auf das Trägerelement (7) aufweist, das in der gewählten Position durch eine Klemmvorrichtung (9) verriegelt ist, die eine Klemmachse (12) aufweist, die einen Versteifungsvierkant (15) des Rohrkörpers (3) und die beiden Stützschenkel (87) und (88) durchquert, wobei die Klemmvorrichtung (3) durch eine Betätigungseinheit (10) bedient wird.

8. Zusammenbau nach einem der Ansprüche 6 oder 7, **dadurch gekennzeichnet, daß**:
- der Ring (4) mit zwei Einschnitten (43) und (44) versehen ist, die in dem äußeren Abschnitt (32) angeordnet sind;
- der Rohrkörper (3) mit zwei Einschnitten (55) und (56) versehen ist, die in seinem Ende (52) angeordnet sind; die Einschnitte (55) und (56) dieselbe Winkelorientierung aufweisen und eine größere Breite als die Breite der entsprechenden Einschnitte (43) und (44) des Rings (4) aufweisen; derart, daß eine Winkeleinstellung des Rings (4) zur Zeit der Anbringung des Rings (4) im Rohrkörper (3) ausgeführt werden kann;
- der Ring (4) axial im Rohrkörper (3) zwischen Innenanschlägen (54) und Bördelverbindungen verriegelt ist; die Innenanschläge (54) auf der Innenseite (50) des Rohrkörpers (3) angeordnet sind und die Bördelverbindungen am Ende (52) des Rohrkörpers (3) angeordnet sind; wobei jede der Bördelverbindungen durch zwei parallele und axiale Richtung aufweisenden Spalte (61) zur Ausführung einer Leiste (62) erhalten wird, die gegen die seitliche Außenseite (29) des Lagers (5) umgelegt ist, wobei jede Leiste (62) eine im äußeren Abschnitt (32) des Rings (4) angeordnete Öffnung (49) durchquert.

9. Zusammenbau nach einem der Ansprüche 6 oder 7, **dadurch gekennzeichnet, daß**:
- der Ring (4) mit zwei Ansätzen (63) und (64) versehen ist, die im äußeren Abschnitt (32) angeordnet sind;
- der Ring (4) axial im Rohrkörper (3) zwischen Innenanschlägen (54) und Bördelverbindungen verriegelt ist; die Innenanschläge (54) auf der Innenseite (50) des Rohrkörpers (3) angeordnet sind und die Bördelverbindungen am Ende (52) des Rohrkörpers (3) angeordnet sind; wobei jede der Bördelverbindungen durch zwei parallele und axial gerichtete Spalte (61) zur Ausführung einer Leiste (62) erhalten wird, die gegen die seitliche Außenseite (29) des Lagers (5) umgebogen ist, wobei jede Leiste (62) eine Öffnung (49) durchquert, die im äußeren Abschnitt (32) des Rings (4) angeordnet ist.

10. Verfahren zur Montage einer Lenkwelle eines Kraftfahrzeugs nach einem beliebigen der vorhergehenden Ansprüche, **dadurch gekennzeichnet, daß** es umfaßt:
- den Eingriff des Lagers (5) im Kunststoffring (4), um die Untereinheit Lager-(5)-Kunststoffring-(4) zu erhalten;
- die Einführung der Untereinheit Lager-(5)-Ring-(4) in den Rohrkörper (3) mit korrekter Winkelorientierung in bezug auf die Klemmachse (12);
- das Eindringen der Untereinheit Lager-(5)-Ring-(4), bis der Ring (4) zur Auflage gegen die Innenanschläge (54) gelangt, dann Umlegen der Bördelverbindungsleisten (62) gegen die seitliche Außenseite (29) des Lagers (5), um die axiale Verriegelung der Untereinheit Lager-(5)-Ring-(4) im Rohrkörper (3) sicherzustellen;
- den Eingriff der Lenkwelle (1) in das Lager (5) mit axialer Anordnung der Lenkwelle in bezug auf den Rohrkörper (3); und
- die Anbringung des Rohrkörpers (3) im Trägerelement (7) oder den Trägerelementen (7) und (8).

11. Verfahren zur Anbringung einer Lenkwelle eines Kraftfahrzeugs nach einem beliebigen der Ansprüche 1 bis 9, **dadurch gekennzeichnet, daß** es umfaßt:
- die Anbringung des Rohrskörpers (3) im Trägerelement (7) oder den Trägerelementen (7) und (8);
- den Eingriff des Lagers im Kunststoffring (4), um die Untereinheit Lager-(5) und Kunststoffring (4) zu erhalten;
- die Einführung der Untereinheit Lager-(5)-Ring-(4) im Rohrkörper (3) mit korrekter Winkelorientierung in bezug auf die Grenzfläche (85) des Trägerelements (7) mit dem Aufbau (13) des Kraftfahrzeugs;
- das Eindringen der Untereinheit Lager-(5)-Ring-(4), bis der Ring (4) zur Auflage gegen die Innenanschläge (54) gelangt, dann Umlegen der Bördelverbindungsleisten (62) gegen die seitliche Außenseite (35) des Lagers (5), um die axiale Verriegelung der Untereinheit Lager-(5)-Ring-(4) im Rohrkörper (3) sicherzustellen; und
- den Eingriff der Lenkwelle (1) in Lager (5) mit axialer Anordnung der Lenkwelle (1) in bezug auf den Rohrkörper (3).

## Claims

1. Assembly of a set of controls (2) with a steering column for a motor vehicle, said steering column in said assembly comprising a steering shaft (1) which is mounted in freely rotatable manner in a tube body (3) by means of two bearings (5 and 6), wherein a steering wheel (14) is connected to the steering shaft (1) and the set of controls (2) is disposed underneath the steering wheel (14) and is mounted on the tube body (3), said tube body (3) is disposed in at least one support element (7) fixed to the body (13) of the motor vehicle, the bearing (5), which is located to the side of the steering wheel (14), is disposed between the tube body (3) and the steering shaft (1), said assembly comprising a ring (4) made of plastics which is arranged between said bearing (5) and the tube body (3), **characterised in that**
- said ring (4) comprises, in the axial direction, a central portion (30) and an outer portion (32), the central portion (30) receiving the bearing (5) and the outer portion (32) being the axial extension of the central portion (30), the outer portion (32) being located to the side of the set of controls (2) and the steering wheel (14);
- said outer portion (32) is provided with at least one shaped portion (43, 44 - 63, 64) which is correctly angularly positioned relative to the interface (85, 90) between one of the support elements (7, 8) and the vehicle structure (13);
- said shaped portion (43, 44 - 63, 64) is arranged and dimensioned so as to interlock with a matching form (73, 74 - 79, 80) which is provided in the set of controls (2), so that this set of controls (2) is mounted on the tube body (3) at the precise desired angular position relative to the interface (85, 90) between one of the support elements (7, 8) and the vehicle structure (13).

2. Assembly according to claim 1, **characterised in that** the ring (4) comprises:
- the central portion (30) in which the bearing (5) is mounted;
- the outer portion (32) which is provided with the shaped portion (43, 44 - 63, 64) for engaging with the matching shaped portion (73, 74 - 79, 80) of the set of controls (2);
- an inner portion (31) which is separated from the central portion (30) by a partition (36), the bearing (5) abutting on the base (41) of said partition (36).

3. Assembly according to claim 2, **characterised in that** the inner portion (31) of the ring (4) is provided with radial reinforcing ribs (39) which are provided on the inner surface (38) of the inner portion (31).

4. Assembly according to any one of the preceding claims, **characterised in that** the ring (4) has at least one shaped assembly portion which consists of a notch (43, 44) which cooperates with a stud (73, 74) provided in the set of controls (2).

5. Assembly according to any one of claims 1 to 3, **characterised in that** the ring (4) has at least one shaped assembly portion which consists of a stud (63, 64) which cooperates with a notch (79,80) provided in the set of controls (2).

6. Assembly according to any one of the preceding claims, **characterised in that** the tube body (3) is arranged in two support elements (7 and 8) fixed to the body (13) of the vehicle.

7. Assembly according to any one of claims 1 to 5, **characterised in that**:
- the tube body 3 is disposed in:
- a first support element (7) consisting of a base (86) having an upright (87, 88) at each end, the tube body (3) being disposed inside the two uprights (87, 88) of the support element (7), said uprights (87, 88) being substantially parallel to the axis (11) of the steering shaft (1),
- a second support element (8) consisting of a base (91) having an upright (92, 93) at each end, the tube body (3) being disposed inside the two uprights (92, 93) of the support element (8), said uprights (92, 93) being substantially parallel to the axis (11) of the steering shaft (1), and said tube body (3) being connected to the support element (89) by an articulation spindle (94),
- the tube body (3) has a system for adjusting the position relative to the support element (7), which is secured in the selected position by a locking device (9) having a locking spindle (12) which passes through a reinforcing block (15) on the tube body (3), and the two uprights (87) and (88), the locking device (3) being controlled by an operating assembly (10).

8. Assembly according to any one of claims 6 or 7, **characterised in that**:
- the ring (4) is provided with two notches (43) and (44) which are arranged in the outer portion (32);
- the tube body (3) is provided with two notches (55) and (56) which are arranged at its end (52); the notches (55) and (56) have the same angular orientation and are wider than the corresponding notches (43) and (44) in the ring (4); so as to allow angular adjustment of the ring (4) when said ring (4) is being mounted in the tube body (3) ;
- the ring (4) is axially secured in the tube body (3) between internal stops (54) and crimps; the internal stops (54) are provided on the inner surface (50) of the tube body (3) and the crimps are provided at the end (52) of the tube body (3); each of the crimps is produced by two parallel, axially directed cuts (61) to form a tab (62) which is folded back against the outer side face (29) of the bearing (5), each tab (62) passing through an opening (49) provided in the outer portion (32) of the ring (4).

9. Assembly according to one of claims 6 and 7, **characterised in that**:
- the ring (4) is provided with two studs (63) and (64) which are formed in the outer portion (32);
- the ring (4) is secured axially in the tube body (3) between internal stops (54) and crimps; the internal stops (54) are provided on the inner surface (50) of the tube body (3), and the crimps are provided at the end (52) of the tube body (3); each of the crimps is produced by two parallel, axially directed cuts (61) to form a tab (62) which is folded back against the outer side face (29) of the bearing (5), each tab (62) passing through an opening (49) provided in the outer portion (32) of the ring (4).

10. Process for mounting a steering column for a motor vehicle according to any one of the preceding claims, **characterised in that** it comprises:
- engaging the bearing (5) in the plastic ring (4) to obtain the bearing (5)/plastic ring (4) sub-assembly;
- introducing the bearing (5)/ring (4) sub-assembly into the tube body (3) in the correct angular orientation relative to the locking spindle (12);
- inserting the bearing (5)/ring (4) sub-assembly until the ring (4) comes to abut on the internal stops (54), then folding the crimping tabs (62) back against the outer side face (29) of the bearing (5), to ensure axial securing of the bearing (5)/ ring (4) sub-assembly in the tube body (3);
- engaging the steering shaft (1) in the bearing (5) with axial positioning of said steering shaft relative to the tube body (3); and
- mounting the tube body (3) in the support element (7) or the support elements (7) and (8).

11. Process for mounting a steering column for a motor vehicle according to any one of claims 1 to 9, **characterised in that** it comprises:
- mounting the tube body (3) in the support element (7) or the support elements (7) and (8);
- engaging the bearing in the plastic ring (4) to obtain the bearing (5)/plastic ring (4) sub-assembly;
- introducing the bearing (5)/ring (4) sub-assembly into the tube body (3) in the correct angular orientation relative to the interface (85) of the support element (7) with the structure (13) of the motor vehicle;
- inserting the bearing (5)/ring (4) sub-assembly until the ring (4) comes to abut on the internal stops (54), then folding the crimping tabs (62) back against the outer side face (35) of the bearing (5), to ensure axial securing of the bearing (5)/ ring (4) sub-assembly in the tube body (3); and
- engaging the steering shaft (1) in the bearing (5) with axial positioning of said steering shaft (1) relative to the tube body (3).
